(19) Europäisches Patentamt / European Patent Office / Office européen des brevets

(11) **EP 4 718 513 A1**

(12) **EUROPEAN PATENT APPLICATION**

(43) Date of publication:
01.04.2026 Bulletin 2026/14

(21) Application number: 25199912.4

(22) Date of filing: 03.09.2025

(51) International Patent Classification (IPC):
*H01M 4/133* (2010.01)   *H01M 4/134* (2010.01)
*H01M 4/36* (2006.01)   *H01M 4/38* (2006.01)
*H01M 4/587* (2010.01)

(52) Cooperative Patent Classification (CPC):
H01M 4/587; H01M 4/133; H01M 4/134;
H01M 4/364; H01M 4/366; H01M 4/386

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 27.09.2024 JP 2024169485

(71) Applicant: Prime Planet Energy & Solutions, Inc.
Chuo-ku, Tokyo 103-0022 (JP)

(72) Inventor: MASUI, Harumi
Tokyo, 103-0022 (JP)

(74) Representative: Kuhnen & Wacker
Patent- und Rechtsanwaltsbüro PartG mbB
Prinz-Ludwig-Straße 40A
85354 Freising (DE)

(54) **NEGATIVE ELECTRODE FOR SECONDARY BATTERY AND SECONDARY BATTERY WITH NEGATIVE ELECTRODE**

(57) The negative electrode of the secondary battery includes a negative electrode current collector and a negative electrode active material layer that is supported by the negative electrode current collector and that contains a negative electrode active material. The negative electrode active material layer includes an upper layer and includes a lower layer. The negative electrode active material contains at least a graphite particle, and a Si-containing particle in which a carbon and a Si are compounded to be composite. A response area size of the negative electrode active material contained in the upper layer is smaller than a response area size of the negative electrode active material contained in the lower layer, and a Si amount of a first Si-containing particle contained in the upper layer is smaller than a Si amount of a second Si-containing particle contained in the lower layer.

FIG.2

EP 4 718 513 A1

**Description**

BACKGROUND

1. Technical Field

A present disclosure relates to a negative electrode for a secondary battery and the secondary battery in which the negative electrode is used.

2. Background

Recently, a secondary battery is suitably used for a portable power supply of a personal computer, a portable terminal, or the like, a power supply for driving automobiles, such as battery electric vehicle (BEV), hybrid electric vehicle (HEV), and plug-in hybrid electric vehicle (PHEV), or the like.

Regarding a purpose for the power supply for driving automobiles, especially regarding a purpose for the power supply for driving the BEV, from a perspective of extending a driving distance of the vehicle, it is desired to make the secondary battery have a higher capacity. As a negative electrode active material whose capacity is high, a Si-containing particle is known (see, for example, Japanese Patent Application Publication No. 2019-175851, Japanese Patent Application Publication No. 2017-92009).

However, although the Si-containing particle has the higher capacity, it has a larger volume change caused by an expansion/contraction when the secondary battery is electrically charged and electrically discharged. Then, in a situation where the Si-containing particle and the graphite particle are used together as the negative electrode active material, when an electrical charge and an electrical discharge are repeated on the secondary battery, there is a problem that an inside stress is increased due to a swell of the negative electrode.

Thus, regarding the negative electrode that contains the Si-containing particle and the graphite particle, it is demanded to develop the negative electrode whose swell is smaller when the electrical charge and the electrical discharge are repeated on the secondary battery. Then, a swell rate of the negative electrode depends not on a surface area size of the negative electrode active material, but on an area size of an area in which a chemical response is actually caused, in other words, depends on an area in which the electrical charge and discharge is performed. Incidentally, this swell of the negative electrode represents that a volume of the negative electrode becomes larger than an initial volume on the same electrical charge state (for example, a state closer to a full charge near a SOC being 80%).

SUMMARY

In view of the above described issue, the present disclosure has an object to provide a negative electrode that contains the Si-containing particle and the graphite particle, that is the negative electrode for a secondary battery whose swell is smaller when the electrical charge and the electrical discharge are repeated on the secondary battery.

A herein disclosed negative electrode is a negative electrode for a secondary battery that includes a negative electrode current collector and includes a negative electrode active material layer which is supported by the negative electrode current collector and which contains a negative electrode active material. The negative electrode active material layer includes an upper layer that is relatively positioned at a surface side and a lower layer that is relatively positioned at a side of the negative electrode current collector. The negative electrode active material includes at least a graphite particle, and a Si-containing particle in which a carbon and a Si are compounded to be composite. A response area size A1 of the negative electrode active material comprised in the upper layer is smaller than a response area size A2 of the negative electrode active material comprised in the lower layer, and a Si amount Q1 of a first Si-containing particle comprised in the upper layer is smaller than a Si amount Q2 of a second Si-containing particle comprised in the lower layer.

In the negative electrode active material layer including a 2-layers structure configured with the upper layer at a surface side and the lower layer at the negative electrode current collector side, one on which the swell comparatively tends to be caused easily is the upper layer at the surface side. Then, regarding the herein disclosed negative electrode, the first Si-containing particle is used in the upper layer where the swell tends to be easily caused, and the second Si-containing particle is used in the lower layer where the swell tends to be caused not easily. Then, the first Si-containing particle has the response area size and the Si amount which are smaller than the second Si-containing particle, and thus the swell relatively tends to be caused not easily. As the result, the swell is suppressed on the whole of the negative electrode active material layer and it is implemented to have the higher capacity derived from the Si. As described above, according to the herein disclosed technique, it is possible to provide a negative electrode for a secondary battery that contains the Si-containing particle and the graphite particle, which is the negative electrode for the secondary battery having the smaller swell when the electrical charge and the electrical discharge are repeated on the secondary battery and having the higher capacity.

In one suitable aspect of the herein disclosed negative electrode, a ratio A1/A2 of the response area size A1 of the negative electrode active material contained in the upper layer and the response area size A2 of the negative electrode active material contained in the lower layer is equal to or more than 0.6 and less than 1.0. By doing this, it is possible to further significantly implement suppressing the negative electrode swell and making the secondary battery have the higher capacity.

In one suitable aspect of the herein disclosed negative electrode, a ratio Q1/Q2 of the Si amount Q1 of the first Si-containing particle and the Si amount Q2 of the second Si-containing particle is equal to or more than 0.4 and less than 1.0. By doing this, it is possible to further significantly implement suppressing the negative electrode swell and making the secondary battery have the higher capacity.

In one suitable aspect of the herein disclosed negative electrode, a ratio T1 : T2 of a mean thickness T1 of the upper layer and a mean thickness T2 of the lower layer is 10 : 90 to 90 : 10. By doing this, it is possible to further significantly implement suppressing the negative electrode swell and making the secondary battery have the higher capacity.

In one suitable aspect of the herein disclosed negative electrode, the Si amount Q1 of the first Si-containing particle is 20 to 55 mass%, and the Si amount Q2 of the second Si-containing particle is 45 to 80 mass%. By doing this, it is possible to further significantly implement suppressing the negative electrode swell and making the secondary battery have the higher capacity.

The herein disclosed secondary battery is a secondary battery that includes a positive electrode, a negative electrode, and an electrolyte, and the negative electrode is the herein disclosed negative electrode.

According to the configuration as described above, it is possible to implement the secondary battery in which the swell of the negative electrode in response to the electrical charge and the electrical discharge is suppressed and which has the higher capacity.

BRIEF DESCRIPTION OF THE DRAWINGS

FIG. 1 is a cross section view that schematically shows an example of a negative electrode 60 in accordance with one embodiment, and is a cross section view that is shown along a thickness direction and a width direction.

FIG. 2 is a schematic cross section view that shows a particle of a negative electrode active material contained in the negative electrode active material layer 64 shown by FIG. 1.

FIG. 3 is a view that schematically shows a configuration of a lithium ion secondary battery constructed with the negative electrode in accordance with one embodiment.

FIG. 4 is a schematic exploded view that shows a configuration of a wound electrode assembly of the lithium ion secondary battery shown by FIG. 3.

DETAILED DESCRIPTION

Below, a preferred embodiment of a herein disclosed technique would be explained. Incidentally, the matters other than matters particularly mentioned in this description and required for implementing the herein disclosed technique can be grasped as design matters of those skilled in the art based on the related art in the present field. The herein disclosed technique can be executed based on the contents disclosed in the present description, and the technical common sense in the present field. Additionally, in drawings explained by the present description, the members/parts providing the same effect are provided with the same numerals and signs and are explained, and overlapped explanation might be omitted or simplified. Additionally, a dimensional relation (a length, a width, a thickness, and the like) in each drawing does not always reflect the actual dimensional relation. In addition, a wording "A to B" representing a numerical value range means to be equal to or more than A and not more than B and semantically covers a numerical value range being more than A and less than B.

A wording "secondary battery" in the present description is a term denoting electricity storage devices that are capable of repeatedly performing an electrical charge and discharge in response to a movement of a charge carrier between a positive electrode and a negative electrode, and is a concept that semantically covers a so-called storage battery (a chemical battery), such as lithium ion secondary battery and sodium ion secondary battery, and a capacitor (a physical battery), such as lithium ion capacitor (LIC). Below, main configuration materials of the secondary battery in accordance with the present disclosure will be described. Incidentally, as configuration materials of the secondary battery not described here, it is possible to use conventionally known ones.

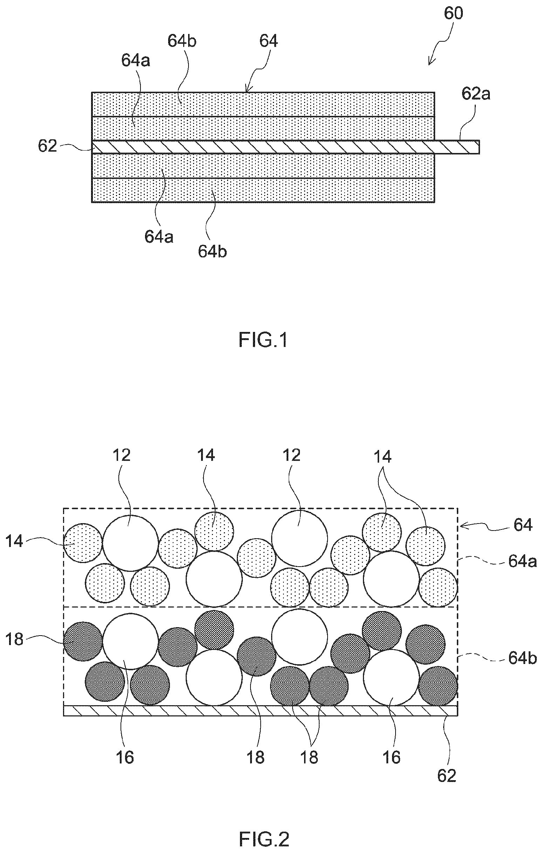

The herein disclosed negative electrode is used for a secondary battery, or suitably used for a lithium ion secondary battery. One embodiment of the herein disclosed negative electrode would be particularly explained, while referring to FIG. 1. FIG. 1 is a cross section view that schematically shows an example of a negative electrode 60 in accordance with the present embodiment, and is a cross section view that is shown along a thickness direction and a width direction. The negative electrode 60 shown by FIG. 1 in accordance with the present embodiment is the negative electrode of the lithium ion secondary battery.

1. Negative electrode

(1) Configuration of negative electrode

As shown in FIG. 1, the negative electrode 60 includes a negative electrode current collector 62 and a negative electrode active material layer 64 that is supported by the negative electrode current collector 62. In other words, the negative electrode 60 includes the negative electrode current collector 62 and the negative electrode active material layer 64 that is provided on the negative electrode current collector 62. The negative electrode active material layer 64 might be provided on only one surface of the negative electrode current collector 62 or might be provided on both surfaces of the negative electrode current collector 62 as shown in FIG. 1. It is preferable that the negative electrode active material layer 64 is provided on both surfaces of the negative electrode current collector 62. In addition, although described later in detail, the negative electrode active material layer 64 contains the negative electrode active material.

As shown in FIG. 1, a negative electrode current collector exposed portion 62a on which the negative electrode current collector 62 is exposed might be provided at one of end parts in the width direction of the negative electrode 60. This negative electrode current collector exposed portion 62a can function as an electrical collector part. However, a configuration for electrically collecting from the negative electrode 60 is not restricted by this.

The negative electrode 60 might include a member, other than the negative electrode current collector 62 and the negative electrode active material layer 64. For example, an insulation layer (not shown in drawings) might be provided on a surface of the negative electrode current collector 62 in an area adjacent to the negative electrode active material layer 64. This insulation layer contains, for example, an inorganic filler having an insulating property, or the like.

A shape of the negative electrode current collector 62 is a foil shape (or a sheet shape) in the illustrated example, but it is not restricted by this. The negative electrode current collector 62 might be formed in a rod shape, a plate shape, a mesh shape, or the like. As a material of the negative electrode current collector 62, similarly to a conventional lithium ion secondary battery, it is possible to use a metal having a good electrically conductive property (for example, copper, nickel, titanium, stainless steel, or the like), and the copper is preferable among them.

A size of the negative electrode current collector 62 is not particularly restricted, and it is good to be suitably decided in accordance with a battery design. In a situation where the copper foil is used as the negative electrode current collector 62, a thickness of it is not particularly restricted, but it might be, for example, equal to or more than 5 $\mu$m and not more than 35 $\mu$m, or preferably equal to or more than 6 $\mu$m and not more than 20 $\mu$m.

As shown in FIG. 1, the negative electrode active material layer 64 has a multi-layers structure. In particular, the negative electrode active material layer 64 includes an upper layer 64a that is relatively positioned at a surface side and includes a lower layer 64b that is relatively positioned at a negative electrode current collector 62 side. Incidentally, the negative electrode active material layer 64 might further include layers, other than the upper layer 64a and the lower layer 64b, within a range where an effect of the present disclosure is not significantly inhibited. For example, the negative electrode active material layer 64 might include a middle layer between the upper layer 64a and the lower layer 64b, as components of these layers are mixed in the middle layer.

The negative electrode active material layer 64 contains a negative electrode active material. Incidentally, the negative electrode active material layer 64 might contain a component other than the negative electrode active material. It is possible, as an example of the component other than the negative electrode active material, to use a binder, an electrically conducting material, or the like. As the binder, for example, it is possible to use a styrene butadiene rubber (SBR), carboxymethyl cellulose (CMC), polyacrylic acid (PAA), polyvinylidene fluoride (PVDF), or the like. The CMC functions as a thickening agent, too. As an example of the electrically conducting material, it is possible to use a carbon black, such as acetylene black, a carbon fiber, a carbon nanotube (CNT), or the like, as the example of the electrically conducting material. Among them, the CNT is preferable. In a situation where the CNT is used as the electrically conducting material, the negative electrode active material layer 64 might contain a dispersing agent for the CNT.

Next, the negative electrode active material of the negative electrode 60 disclosed herein will be described in detail with FIG. 2. FIG. 2 is a schematic cross section view that shows a particle of a negative electrode active material contained in the negative electrode active material layer 64 shown by FIG. 1. Incidentally, FIG. 2 is a schematic view, and a number of the particles, a distribution of the particles, or the like, is not restricted to one shown by FIG. 2.

The negative electrode active material contains at least a graphite particle and a Si-containing particle. In the below described explanation, the graphite particle and the Si-containing particle in the upper layer are respectively referred to as "first graphite particle" and "first Si-containing particle", and the graphite particle and the Si-containing particle in the lower layer are respectively referred to as "second graphite particle" and "second Si-containing particle". Therefore, in the upper layer 64a, at least the first graphite particle 12 and the first Si-containing particle 14 are used as the negative electrode active material. In the lower layer 64b, at least the second graphite particle 16 and the second Si-containing particle 18 are used as the negative electrode active material. This Si-containing particle has the large volume change caused by the expansion/contraction in response to the electrical charge and discharge. However, when it is used together with the graphite particle, it is possible to suppress a disconnection of an electrically conductive path caused by the volume change of the Si-containing particle.

The graphite configuring the graphite particle in the negative electrode active material (in short, the first graphite particle 12 and the second graphite particle 16) might be a natural graphite or an artificial graphite, or might be an amorphous carbon coated graphite having a form in which the graphite is coated with an amorphous carbon material.

The shapes of the first graphite particle 12 and the second graphite particle 16 are not particularly restricted, and might be scaly shapes, spheroidized shapes, or the like. The first graphite particle 12 and the second graphite particle 16 are preferably spheroidized graphite particles. In a situation where the first graphite particle 12 and the second graphite particle 16 are spheroidized, circularities of the first graphite particle 12 and the second graphite particle 16 are preferably 0.85 to 1, further preferably 0.88 to 1, or furthermore preferably 0.90 to 1.

Incidentally, the term "circularity" in the present description represents a ratio of a perimeter of a perfect circle whose area size is the same as a projected area size of a particle with respect to a perimeter of a particle projected image (in other words, the circularity = the perimeter of the perfect circle whose area size is the same as the projected area size / the perimeter of the particle projected image). Thus, as the circularity is closer to 1, it means that the particle projected image is closer to the perfect circle and the particle becomes closer to a perfect spherical shape. The circularity can be obtained, for example, by using a commercially available static automatic image analysis apparatus, obtaining the circularities of 100 or more particles, and calculating a mean value of them.

A mean particle diameter of the first graphite particle 12 and a mean particle diameter of the second graphite particle 16 are not particularly restricted. Each of the mean particle diameter of the first graphite particle 12 and the mean particle diameter of the second graphite particle 16 is, for example, 1 $\mu$m to 30 $\mu$m, preferably 5 $\mu$m to 25 $\mu$m, further preferably 10 $\mu$m to 23 $\mu$m, or furthermore preferably 12 $\mu$m to 20 $\mu$m.

Incidentally, in the present description, the term "mean particle diameter" represents a median diameter (D50), and represents a D50 particle diameter corresponding to cumulative frequency 50 volume% from a side of a fine particle, whose particle diameter is smaller, with respect to a particle size distribution on a volume basis according to a laser diffraction and scattering method. The D50 particle diameter can be obtained with a commercially available particle size distribution measuring device configured in a laser diffraction and scattering style, or the like.

As the first graphite particle 12 and the second graphite particle 16, the same kind of graphite particles might be used or different graphite particles might be used. As the first graphite particle 12 and the second graphite particle 16, it is particularly preferable to use the same graphite particles.

The Si-containing particle is a composite body configured with the carbon and the Si. For example, the Si-containing particle might be one in which a fine particle containing the Si is dispersed at an inside of the carbon material; one in which the fine particle containing the Si enters into a void of a granulated porous graphite; one in which the fine particle containing the Si adheres to a surface of the carbon particle; one in which the carbon fine particle adheres to the surface of the particle containing the Si, or the like. From a perspective of suppressing the volume change of the Si, it is preferable to use one in which the Si nanoparticle is dispersed at the inside of the carbon material, and one in which the Si nanoparticle is dispersed inside the void of the porous carbon material, or it is further preferable to use one in which the Si nanoparticle is dispersed inside the void of the porous carbon material. As one example of the Si-containing particle, for example, it is possible to use a particle of the Si-C composite material. The Si-C composite material typically contains a carbon domain and a Si-containing domain.

The carbon domain is, for example, a carbonide of a carbon precursor (for example, a petroleum pitch, a coal pitch, a phenolic resin, or the like); a graphite; or the like. The carbon domain suitably configures a carbon matrix. Thus, the Si-C composite material is suitably a material in which plural Si-containing domains are dispersed into a carbon matrix. In this case, the carbon matrix can relieve a volume change caused by the expansion/contraction of the Si-containing domain, and thus it is advantageous.

The Si-containing domain contains the Si, and is configured with, for example, the Si, a Si oxide ($SiO_x$), a Si nitride ($SiN_x$), a Si carbide ($SiC_x$), or the like. The Si-containing domain is configured with preferably at least any of the Si and the Si oxide ($SiO_x$). The Si-containing domain might be a fine particle. An oxygen content amount of the Si-containing domain is preferably equal to or less than 10 mass%.

A mean particle diameter of the Si-containing domain is, for example, equal to or less than 50 nm, or might be 5 nm to 50 nm. Incidentally, said "mean particle diameter of the Si-containing domain" can be obtained as described below. At first, the negative electrode active material layer 64 is subjected to a FIB (a focused ion beam) processing, so as to manufacture a specimen for a scan transmission electron microscope (STEM) observation. Then, after this specimen is subjected to an element analysis by EDX elemental mapping, a BF image (a bright field image) and a HAADF image (a high angle annular dark field image) are obtained. From a contrast and a shape obtained with the BF image and the HAADF image, it is possible to obtain a diameter of the Si-containing domain. Diameters of arbitrary selected 10 or more Si-containing domains are obtained, and a mean value of them is herein treated as said "mean particle diameter of the Si-containing domain".

Incidentally, the first Si-containing particle 14 and the second Si-containing particle 18 can be manufactured by a well known method. Incidentally, various manufacturing methods of the particle of the Si-C composite material are well known (see, for example, Japanese Patent Application Publication No. 2015-38862, International Patent Publication No. 2014/046144, prior art documents recited in these publications, or the like).

In the present description, the first Si-containing particle 14 and the second Si-containing particle 18 are defined by a response area size (below, which might be described as a capacitance) and a Si amount. Incidentally, these values are independent from each other, and can indicate, from different perspectives, a degree of the expansion of the Si-containing particle before and after the electrical charge and discharge.

The response area size of the negative electrode active material can indicate the degree of the expansion depending on the area on which a chemical response is actually caused. For example, the response area size of the negative electrode active material (the first graphite particle and the first Si-containing particle) in the upper layer can be derived by a below described procedure.

A later described negative electrode composite material paste for the upper layer is applied to coat a Cu foil whose thickness is 10 μm, dried, pressed and processed to have a predetermined thickness and a size, so as to obtain the negative electrode plate. A lead is attached to this negative electrode plate, and the negative electrode plate is laminated via a separator, so as to manufacture the electrode assembly containing the first graphite particle and the first Si-containing particle. The manufactured electrode assembly is inserted into an outer case configured with an aluminum laminate sheet, then a liquid injection of a nonaqueous electrolyte is performed, and an opening part of the outer case is sealed, so that the negative-electrode/negative-electrode symmetric cell is manufactured. After that, an impedance measurement of the manufactured negative-electrode/negative-electrode symmetric cell is performed under 25°C environment, and then the capacitance is derived from the measured value. Then, by the below described Formula (1), a response area size [F/g] of the negative electrode active material can be derived. This response area size is measured on a basis of the resistance value in an actual electrical charge and discharge response, thus is not a value depending on a surface area size of the negative electrode active material, and therefore can be also expressed as an area on which the chemical response is actually caused. Incidentally, by changing a composition of the composite material paste that forms the negative electrode active material layer, it is possible to derive an response area size of the individual graphite particle or the individual Si-containing particle.

$$\text{Response area} = (\text{Capacitance})/(\text{Addition amount of negative electrode active material})$$

Formula (1)

In comparison with a secondary battery in which a silicon or a carbon is used as the negative electrode active material, it is known that one using the silicon has a theoretical capacity being more than 10 times higher. Thus, there is a tendency that the response area size derived from the Si material is larger than the response area size derived from the carbon. Then, in a situation where the Si material is used as the negative electrode active material, it is possible to implement the secondary battery having the high capacity. Incidentally, regarding the lithium ion secondary battery, when the electrolytic solution comes into contact with an active material surface at the first electrically charging time, a SEI coating layer is formed. Then, the swell of the negative electrode is preceded by a deposition of the SEI coating layer, and thus it is possible to further suppress the swell of the negative electrode due to the electrical charge and discharge as the response area size of the negative electrode active material is smaller. As described above, regarding the silicon in comparison with the carbon, a volume expansion at the electrically charging time is larger and it is not easy at the electrically discharging time to return to the original volume. Therefore, in a situation where the Si material is used as the negative electrode active material, the swell of the negative electrode due to the electrical charge and discharge tends to be easily caused.

Next, the term Si amount Q in the present description represents a weight% concentration of the silicon when a total weight of the Si-containing particle is treated as 100 weight%, and it shows a constant value even if the particle is deformed in response to the electrical charge and discharge. In addition, from a perspective different from the above described response area size, it can show an expansion degree of the negative electrode before and after the electrical charge. Below, a relationship between the Si amount and the response area size is explained.

As described above, the response area can be also expressed as the area on which the chemical response is actually caused. For example, in a situation where the electrolytic solution is hardly impregnated into the Si-containing particle because of an effect of an inside structure which is the void of the Si-containing particle, or the like, the response area size can become a comparatively smaller value even if the Si amount is comparatively larger.

Further, even if the Si-containing particle has the Si amount being comparatively larger and has the response area size being comparatively smaller as described above, the Si-containing particle might be deformed in response to the electrical charge and discharge so as to change an impregnation property of the electrolytic solution and thus the response area size might be increased. In short, the response area size might be, different from the Si amount, fluctuated by the deformation of the particle in response to the electrical charge and discharge.

Here, the negative electrode swell of the secondary battery would be explained, while the lithium ion secondary battery is used as an example. On a whole of the lithium ion secondary battery, in response to the electrical charge and discharge, a reversible chemical response in which the lithium ion moves back and forth between the positive electrode and the negative electrode is mainly caused. However, a response other than the response related to the electrical charge and discharge (which is defined as a side reaction in the present description) is also caused, and this side reaction can be a cause of the negative electrode swell. As described above, in a situation where the response area size of the Si-containing particle is comparatively smaller and the Si amount is comparatively smaller, it can be said that the side reaction is not easily caused on the negative electrode and the swell is suppressed. Incidentally, the explanation about the above described action mechanism of the present technique is an estimate and thus is not to restrict the present technique.

(2) Suppress of negative electrode plate expansion

When the electrical charge and the electrical discharge are performed on the secondary battery, the negative electrode active material near the negative electrode current collector suffers an effect of the expansion of the negative electrode active material positioned closer to the surface side, and there is a tendency that the expansion is inhibited. Conversely, the negative electrode active material positioned near the surface of the negative electrode active material layer does not have a factor by which the expansion is inhibited. Further, the particle moves not easily in the lower layer 64b, and thus a disconnection of a conducting path at the electrical charge and discharge time is suppressed. Therefore, in the lower layer 64b, the swell of the negative electrode due to the disconnection of the electrically conductive path (the swell or the like, caused by battery response becoming not-consistent so as to have a response or a stress being locally concentrated) tends to be easily suppressed. In other words, on the negative electrode active material layer 64 in which the negative electrode active material layer is configured with a 2-layers structure, one having the swell being larger when the electrical charge and the electrical discharge are repeated on the secondary battery is the upper layer. Below, from perspectives regarding the response area sizes, the Si amounts, the mean particle diameters, and the content amounts of the Si-C containing particles in the upper layer 64a and the lower layer 64b and regarding the thicknesses T of the upper layer 64a and the lower layer 64b, suppressing the negative electrode plate expansion is explained.

(A) Response area size A and Si amount Q

On the negative electrode active material layer 64 according to the present disclosure, the response area size A1 of the negative electrode active material in the upper layer 64a is smaller than the response area size A2 of the negative electrode active material in the lower layer 64b, and the Si amount Q1 of the first Si-containing particle 14 contained in the upper layer is smaller than the Si amount Q2 of the second Si-containing particle 18 contained in the lower layer. By doing this, the swell of the upper layer 64a in which the swell comparatively tends to be easily caused can be suppressed, and thus it is possible to efficiently suppress the swell of the whole negative electrode active material layer 64. While, on the lower layer 64b in which the swell relatively tends to be caused not easily, the second Si-containing particle 18 is used whose response area size and Si amount are comparatively larger. By doing this, it is possible to suppress the swell of the whole negative electrode active material layer 64 and further to contribute in making the secondary battery have the higher capacity. Based on the above results, it is possible to secure a sufficient capacity for the whole negative electrode active material layer 64, and further to significantly suppress the swell of the negative electrode 60 when the electrical charge and discharge is repeated.

A ratio (A1/A2) of the response area size A1 of the negative electrode active material contained in the upper layer and of the response area size A2 of the negative electrode active material contained in the lower layer is, from a perspective of making the secondary battery have the higher capacity, preferably equal to or more than 0.6, further preferably equal to or more than 0.65, or preferably in particular equal to or more than 0.7. On the other hand, from perspectives of inhibiting the disconnection of the electrically conductive path at the electrical charge and discharge time and suppressing the swell of the negative electrode, it is preferably less than 1.0, further preferably equal to or less than 0.9, or preferably in particular equal to or less than 0.8.

A ratio (Q1/Q2) of the Si amount Q1 of the first Si-containing particle and of the Si amount Q2 of the second Si-containing particle is, from a perspective of making the secondary battery have the higher capacity, preferably equal to or more than 0.4, further preferably equal to or more than 0.5, or preferably in particular equal to or more than 0.6. On the other hand, from perspectives of inhibiting the disconnection of the electrically conductive path at the electrical charge and discharge time and suppressing the swell of the negative electrode, it is preferably less than 1.0, further preferably equal to or less than 0.8, or preferably in particular equal to or less than 0.7.

The Si amount Q1 of the first Si-containing particle in the upper layer is, from a perspective of making the secondary battery have the higher capacity, preferably equal to or more than 20 mass%, further preferably equal to or more than 30 mass%, or preferably in particular equal to or more than 40 mass%. On the other hand, from a perspective of suppressing the swell of the negative electrode, it is preferably equal to or less than 55 mass%, further preferably equal to or less than 50 mass%, or preferably in particular equal to or less than 45 mass%.

The Si amount $Q2$ of the second Si-containing particle in the lower layer is, from a perspective of making the secondary battery have the higher capacity, preferably equal to or more than 45 mass%, further preferably equal to or more than 50 mass%, or preferably in particular equal to or more than 55 mass%. On the other hand, from a perspective of suppressing the swell of the negative electrode, it is preferably equal to or less than 80 mass%, further preferably equal to or less than 70 mass%, or preferably in particular equal to or less than 60 mass%.

(B) Mean particle diameter M

As described above, in the present description, by restricting the response area size $A$ and the Si amount $Q$ of the Si-containing particle, suppressing the swell of the negative electrode is implemented. Thus, the particle diameters of the first Si-containing particle 14 and the second Si-containing particle 18 according to the present disclosure are not particularly restricted. Incidentally, the mean particle diameter of the Si-containing particle can be measured by a method being the same as the above described method for measuring the mean particle diameter. The mean particle diameters of the first Si-containing particle 14 and the second Si-containing particle 18 are, for example, 1 $\mu$m to 20 $\mu$m, preferably 2 $\mu$m to 15 $\mu$m, further preferably 3 $\mu$m to 10 $\mu$m, or further preferably 4 $\mu$m to 7 $\mu$m.

Incidentally, it is preferable that the particle diameter of the Si-containing particle is adjusted in consideration of a relationship with the particle diameter of the graphite particle. For example, a ratio (D50 of the first graphite particle 12 / D50 of the first Si-containing particle 14) of the mean particle diameter of the first graphite particle 12 with respect to the mean particle diameter of the first Si-containing particle 14 is not particularly restricted. From a perspective of implementing the higher packing ability, the ratio (D50 of the first graphite particle 12 / D50 of the first Si-containing particle 14) is preferably 1.0 to 8.0, further preferably 1.0 to 5.0, further preferably 1.2 to 3.0, or preferably in particular 1.4 to 2.5.

On the other hand, the ratio (D50 of the second graphite particle 16 / D50 of the second Si-containing particle 18) of the mean particle diameter of the second graphite particle 16 with respect to the mean particle diameter of the second Si-containing particle 18 is not particularly restricted. From a perspective of implementing the higher packing ability, the ratio (D50 of the second graphite particle 16 / D50 of the second Si-containing particle 18) is preferably 1.0 to 8.0, further preferably 1.0 to 5.0, furthermore preferably 1.2 to 3.0, or preferably in particular 1.4 to 2.5.

(C) Content amount

A content amount of the negative electrode active material in the upper layer 64a (in other words, with respect to a total mass of the upper layer 64a) is preferably equal to or more than 90 mass%, or further preferably equal to or more than 95 mass%. A content amount of the binder in the negative electrode active material layer is preferably equal to or more than 0.1 mass% and not more than 8 mass%, or further preferably equal to or more than 0.5 mass% and not more than 5 mass%. A content amount of the electrically conducting material in the negative electrode active material layer 64 is preferably equal to or more than 0.01 mass% and not more than 3 mass%, or further preferably equal to or more than 0.05 mass% and not more than 1 mass%.

A content amount of the negative electrode active material in the lower layer 64b (in other words, with respect to a total mass of the lower layer 64b) is preferably equal to or more than 90 mass%, or further preferably equal to or more than 95 mass%. A content amount of the binder in the negative electrode active material layer is preferably equal to or more than 0.1 mass% and not more than 8 mass%, or further preferably equal to or more than 0.5 mass% and not more than 5 mass%. A content amount of the electrically conducting material in the negative electrode active material layer 64 is preferably equal to or more than 0.01 mass% and not more than 3 mass%, or further preferably equal to or more than 0.05 mass% and not more than 1 mass%.

The mass rate $N1$ of the first Si-containing particle 14 with respect to the content amount of the negative electrode active material in the upper layer 64a (in other words, a total mass of the first graphite particle 12 and the first Si-containing particle 14) is, from a perspective of making the secondary battery have the higher capacity, preferably equal to or more than 10 mass%, or preferably in particular equal to or more than 15 mass%. On the other hand, from a perspective of suppressing the swell of the negative electrode plate, it is preferably equal to or less than 60 mass%, preferably equal to or less than 40 mass%, or further preferably equal to or less than 20%.

The mass rate $N2$ of the second Si-containing particle 18 with respect to the content amount of the negative electrode active material in the lower layer 64b (in other words, a total mass of the second graphite particle 16 and the second Si-containing particle 18) is, from a perspective of making the secondary battery have the higher capacity, preferably equal to or more than 10 mass%, or preferably in particular equal to or more than 15 mass%. On the other hand, from a perspective of suppressing the swell of the negative electrode plate, it is preferably equal to or less than 60 mass%, further preferably equal to or less than 40 mass%, or preferably in particular equal to or less than 20 mass%.

The negative electrode active material contained in the upper layer 64a might be only the first graphite particle 12 and the first Si-containing particle 14. However, the upper layer 64a might contain an additional negative electrode active material, other than the first graphite particle 12 and the first Si-containing particle 14, within a range where the effect of the present disclosure is not inhibited (for example, equal to or less than 10 mass% of a total amount of the negative electrode active material contained in the upper layer 64a).

The negative electrode active material contained in the lower layer 64b might be only the second graphite particle 16 and the second Si-containing particle 18. However, the lower layer 64b might contain additional negative electrode active material, other than the second graphite particle 16 and the second Si-containing particle 18, within a range where the effect of the present disclosure is not inhibited (for example, equal to or less than 10 mass% of a total amount of the negative electrode active material contained in the lower layer 64b).

(D) Thicknesses T of upper layer and lower layer

In the present description, the thickness of the upper layer represents a maximum thickness of the negative electrode active material layer that contains only the first graphite particle and the first Si-containing particle as the negative electrode active material. Incidentally, the thickness of the lower layer similarly represents a maximum thickness of the negative electrode active material layer that contains only the second graphite particle and the second Si-containing particle as the negative electrode active material. One suitable aspect of the negative electrode according to one embodiment is formed to make the thickness of the upper layer 64a, among the multi-layers included by the negative electrode active material layer, be comparatively thinner. By doing this, the swell is suitably suppressed on the upper layer 64a, and as the result, it is possible to suppress the swell of the whole negative electrode 60.

On the other hand, the lower layer 64b is formed to have the thickness being comparatively thicker. As described above, on the lower layer 64b, the swell comparatively tends to be caused not easily. By making this lower layer 64b be relatively thicker, it is possible to suppress the swell of the negative electrode 60 as a whole. In addition, the lower layer 64b contains the second Si-containing particle 18 whose capacity is high, and thus, by making this lower layer 64b be thicker, it is possible to make the secondary battery have the higher capacity. Based on the results described above, as a whole of the negative electrode active material layer 64, it is possible to significantly implement suppressing the swell of the negative electrode 60 when the electrical charge and the electrical discharge are repeated on the secondary battery and making the secondary battery have the higher capacity.

A ratio (T1 : T2) of a thickness T2 of the lower layer with respect to a thickness T1 of the upper layer is, from a perspective of suppressing the swell of the negative electrode plate, preferably 10 : 90 to 90 : 10, further preferably 10 : 90 to 50 : 50, or preferably in particular 20 : 80 to 40 : 60.

(3) Manufacture of negative electrode

The negative electrode 60 can be suitably manufactured, for example, by a manufacturing method including a step for mixing the second graphite particle 16 and the second Si-containing particle 18 into a dispersion medium so as to prepare a negative electrode composite material paste for lower layer; a step for mixing the first graphite particle 12 and the first Si-containing particle 14 into the dispersion medium so as to prepare a negative electrode composite material paste for upper layer; a step for applying the negative electrode composite material paste for lower layer to coat the negative electrode current collector 62 and drying it so as to form the lower layer 64b; a step for applying the negative electrode composite material paste for upper layer to coat the lower layer 64b and drying it so as to form the upper layer 64a; and a step for pressing the formed upper layer 64a and lower layer 64b (below, which might be referred to as "pressing step", too).

Incidentally, in the present description, the term "paste" represents a mixture in which a part or all of solid contents are dispersed into a dispersion medium, and semantically covers so-called "slurry", "ink", or the like.

The negative electrode composite material paste for lower layer preparing step is to mix the second graphite particle 16, the second Si-containing particle 18, and an arbitrary component (for example, the binder, the electrically conducting material, or the like) so as to adjust the lower layer formation paste. This step can be performed according to a well known method, by mixing them with the dispersion medium (for example, water), as using a well known mixing device, a stirring device, or the like.

The negative electrode composite material paste for upper layer preparing step is to mix the first graphite particle 12, the first Si-containing particle 14, and the arbitrary component (for example, the binder, the electrically conducting material, or the like) so as to adjust the upper layer formation paste. This step can be performed according to a well known method, by mixing them with the dispersion medium (for example, water), as using a well known mixing device, a stirring device, or the like. Incidentally, the negative electrode composite material paste for upper layer preparing step might be performed in parallel to the negative electrode composite material paste for lower layer preparing step. The negative electrode composite material paste for upper layer preparing step might be performed in parallel to, or after the lower layer forming step.

The lower layer forming step is to apply the negative electrode composite material paste for lower layer to coat the negative electrode current collector 62 and then to dry it. The present step can be performed with a well known coating device by applying the paste to coat and then drying it. By drying this, the lower layer (the lower layer 64b) is formed.

The upper layer forming step is to apply the negative electrode composite material paste for upper layer to coat the lower layer 64b and to dry it. The present step can be performed with a well known coating device by applying the paste to coat and then drying it. By doing this, the upper layer (the upper layer 64a) is formed, so that the negative electrode active material layer 64 is formed.

The pressing step is to apply a pressure on the formed upper layer and lower layer described above (in other words, the negative electrode active material layer 64) so as to compress to a predetermined density. In the present step, by applying the pressure with a well known pressing device, for example, roller press, or the like, it is possible to compress the upper layer and the lower layer to a predetermined density. By performing the pressing step, the negative electrode active material layer 64 is compressed to have a predetermined density, and by doing this, the negative electrode active material particle is densely packed.

Incidentally, although a density of the negative electrode active material layer 64 after the pressing is not particularly restricted, it is, for example, equal to or more than $0.7 \, \text{g/cm}^3$, preferably equal to or more than $1.0 \, \text{g/cm}^3$, or further preferably equal to or more than $1.2 \, \text{g/cm}^3$. On the other hand, the density of the negative electrode active material layer 64 might be, for example, equal to or less than $2.3 \, \text{g/cm}^3$, or might be equal to or less than $2.0 \, \text{g/cm}^3$.

2. Secondary battery

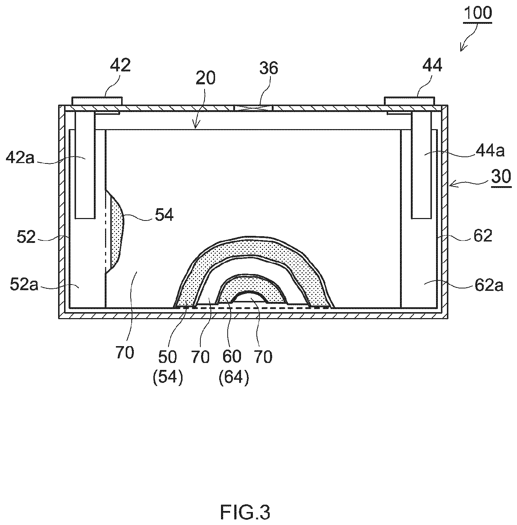

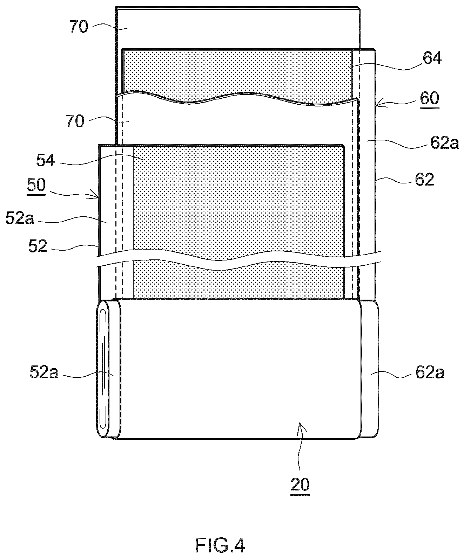

The herein disclosed secondary battery includes the positive electrode, the negative electrode, and an electrolyte. This negative electrode is the negative electrode 60 in accordance with the above described embodiment. By the negative electrode 60 in accordance with the present embodiment, it is possible to suppress the swell of the negative electrode 60 when the electrical charge and the electrical discharge are repeated on the secondary battery. **In** addition, the negative electrode 60 in accordance with the present embodiment uses the negative electrode active material containing the Si, and thus it is possible to make the secondary battery have the higher capacity. One embodiment of the herein disclosed secondary battery would be explained while referring to FIG. 3 and FIG. 4. Incidentally, a below described configuration example is a lithium ion secondary battery that is formed in a flat square shape and that includes a wound electrode assembly formed in a flat shape and includes a battery case formed in a flat shape.

FIG. 3 is a view that schematically shows a configuration of a lithium ion secondary battery constructed with the negative electrode in accordance with one embodiment. The lithium ion secondary battery 100 shown in FIG. 3 is constructed by accommodating the flat-shaped wound electrode assembly 20 and the nonaqueous electrolytic solution (not shown in drawings) in the battery case (in other words, the outer container) 30 formed in a flat square shape. The battery case 30 is provided with a positive electrode terminal 42 and a negative electrode terminal 44 which are for outside connection, and provided with a thin-walled safe valve 36 which is set to release an internal pressure of the battery case 30 when the internal pressure is increased to be equal to or more than a predetermined level. The battery case 30 is provided with an injection port (not shown in drawings) for injecting the nonaqueous electrolytic solution. The positive electrode terminal 42 is electrically connected to a positive electrode current collection plate 42a. The negative electrode terminal 44 is electrically connected to a negative electrode current collection plate 44a. As a material of the battery case 30, for example, it is possible to use a metal material, such as aluminum, being lightweight and having a good thermal conductivity.

FIG. 4 is a schematic exploded view that shows a configuration of a wound electrode assembly of the lithium ion secondary battery shown by FIG. 3. The wound electrode assembly 20 has, as shown by FIG. 3 and FIG. 4, a positive electrode sheet 50 and a negative electrode sheet 60 that are stacked one on another via two long separator sheets 70. Then, it has a form in which the positive electrode sheet 50 and the negative electrode sheet 60 are wound in a longitudinal direction. The positive electrode sheet 50 has a configuration in which a positive electrode active material layer 54 is formed on one surface or both surfaces (here, both surfaces) of a long positive electrode current collector 52 along the longitudinal direction. The negative electrode sheet 60 has a configuration in which the negative electrode active material layer 64 is formed on one surface or both surfaces (here, both surfaces) of the long negative electrode current collector 62 along the longitudinal direction. The positive electrode current collector exposed portion 52a (in other words, a portion where the positive electrode active material layer 54 is not formed and the positive electrode current collector 52 is exposed) and the negative electrode current collector exposed portion 62a (in other words, a portion where the negative electrode active material layer 64 is not formed and the negative electrode current collector 62 is exposed) are formed to protrude outwardly from both ends of the wound electrode assembly 20 in the winding axis direction (in other words, a sheet width direction orthogonal to the longitudinal direction). To the positive electrode current collector exposed portion 52a and the negative electrode current collector exposed portion 62a, the positive electrode current collection plate 42a and the negative electrode current collection plate 44a are respectively joined.

As the positive electrode current collector 52 configuring the positive electrode sheet 50, it is possible to use a well known positive electrode current collector that is used for the lithium ion secondary battery, and it is possible as an example of it to use a sheet or a foil which is made from a metal having the good electrically conductive property (for example, aluminum, nickel, titanium, stainless steel, or the like). As the positive electrode current collector 52, it is preferable to use the aluminum foil.

A size of the positive electrode current collector 52 is not particularly restricted, and can be decided suitably according to a battery design. **In** a situation where the aluminum foil is used as the positive electrode current collector 52, a thickness of it is not particularly restricted, but is, for example, equal to or more than 5 $\mu$m and not more than 35 $\mu$m, or preferably equal to or more than 7 $\mu$m and not more than 20 $\mu$m.

The positive electrode active material layer 54 contains a positive electrode active material. As the positive electrode active material, it is possible to use a positive electrode active material which is used for the lithium ion secondary battery and whose composition is well known. In particular, for example, it is possible as the positive electrode active material to use a lithium composite oxide, a lithium transition metal phosphate compound, or the like. The crystal structure of the positive electrode active material is not particularly restricted, but might be a layered structure, a spinel structure, an olivine structure, or the like.

Regarding the lithium composite oxide, it is preferable as a transition metal element to use a lithium transition metal complex oxide containing at least 1 kind among Ni, Co, and Mn, and it is possible as a specific example of it to use a lithium nickel base composite oxide, a lithium cobalt base composite oxide, a lithium manganese base composite oxide, a lithium nickel manganese base composite oxide, a lithium nickel cobalt manganese base composite oxide, a lithium nickel cobalt aluminum base composite oxide, a lithium iron nickel manganese base composite oxide, or the like.

Incidentally, the term "lithium nickel cobalt manganese base composite oxide" in the present description is a term semantically covering not only the oxide whose constituent element is Li, Ni, Co, Mn, or O, but also an oxide containing 1 kind, 2 kinds, or more kinds of additive elements other than them. As an example of the additive element described above, it is possible to use a transition metal element, such as Mg, Ca, Al, Ti, V, Cr, Y, Zr, Nb, Mo, Hf, Ta, W, Na, Fe, Zn, and Sn, a typical metal element, or the like. The additive element might be a semimetal element, such as B, C, Si, and P, or a non-metal element, such as S, F, Cl, Br, and I. This matter is similar even on the above described lithium nickel base composite oxide, lithium cobalt base composite oxide, lithium manganese base composite oxide, lithium nickel manganese base composite oxide, lithium nickel cobalt aluminum base composite oxide, lithium iron nickel manganese base composite oxide, or the like.

As the lithium transition metal phosphate compound, it is possible to use, for example, lithium iron phosphate ($LiFePO_4$), lithium manganese phosphate ($LiMnPO_4$), lithium manganese iron phosphate, or the like.

Regarding these positive electrode active materials, 1 kind might be used alone, or 2 or more kinds might be combined so as to be used. As the positive electrode active material, the lithium nickel cobalt manganese base composite oxide is especially preferable because it has superior characteristics, such as initial resistance characteristic.

A mean particle diameter of the positive electrode active material is not particularly restricted, but is, for example, equal to or more than 0.05 $\mu$m and not more than 25 $\mu$m, preferably equal to or more than 1 $\mu$m and not more than 20 $\mu$m, or further preferably equal to or more than 3 $\mu$m and not more than 15 $\mu$m.

The positive electrode active material layer 54 might contain a component other than the positive electrode active material, such as trilithium phosphate, electrically conducting material, and binder. As the electrically conducting material, it is possible to suitably use, for example, a carbon black, such as acetylene black (AB); a carbon fiber, such as vapor grown carbon fiber (VGCF) and carbon nanotube (CNT); or another carbon material (for example, a graphite, or the like). As the binder, it is possible to use, for example, polyvinylidene fluoride (PVdF), or the like.

A content amount of the positive electrode active material in the positive electrode active material layer 54 (in other words, a content amount of the positive electrode active material with respect to a total mass of the positive electrode active material layer 54) is not particularly restricted, but preferably equal to or more than 70 mass%, further preferably equal to or more than 80 mass%, or furthermore preferably equal to or more than 85 mass% and not more than 99 mass%. The content amount of the trilithium phosphate in the positive electrode active material layer 54 is not particularly restricted, but is preferably equal to or more than 0.1 mass% and not more than 15 mass%, or further preferably equal to or more than 0.2 mass% and not more than 10 mass%. The content amount of the electrically conducting material in the positive electrode active material layer 54 is not particularly restricted, but preferably equal to or more than 0.1 mass% and not more than 20 mass%, or further preferably equal to or more than 0.3 mass% and not more than 15 mass%. A content amount of the binder in the positive electrode active material layer 54 is not particularly restricted, but preferably equal to or more than 0.4 mass% and not more than 15 mass%, or further preferably equal to or more than 0.5 mass% and not more than 10 mass%.

A thickness per one surface of the positive electrode active material layer 54 is not particularly restricted, but is normally equal to or more than 10 $\mu$m, or preferably equal to or more than 20 $\mu$m. On the other hand, this thickness is normally equal to or less than 400 $\mu$m, or preferably equal to or less than 300 $\mu$m.

As the negative electrode sheet 60, the above described negative electrode 60 is used.

As the separator 70, it is possible to use, for example, a porous sheet (film) configured with a resin, such as polyethylene (PE), polypropylene (PP), polyester, cellulose, and polyamide. The porous sheet described above might have a single layer structure, or might have two or more layers laminate structure (for example, a three layers structure in which PP layers are laminated on both surfaces of a PE layer). On a surface of the separator 70, a heat resistance layer (HRL) might be provided.

A thickness of the separator 70 is not particularly restricted, but is, for example, equal to or more than 5 $\mu$m and not more than 50 $\mu$m, or preferably equal to or more than 10 $\mu$m and not more than 30 $\mu$m. An air permeability of the separator 70 obtained by Gurley test is not particularly restricted, but is preferably equal to or less than 350 second / 100 cc.

The nonaqueous electrolytic solution contains, typically, a nonaqueous solvent and a supporting salt (an electrolyte salt). As the nonaqueous solvent, it is possible without particular restriction to use an organic solvent, such as carbonates, ethers, esters, nitriles, sulfones, and lactones, which can be used for the electrolytic solution of a general lithium ion secondary battery. Among them, the carbonates are preferable, and it is possible as a specific example of them to use ethylene carbonate (EC), propylene carbonate (PC), diethyl carbonate (DEC), dimethyl carbonate (DMC), ethyl methyl carbonate (EMC), monofluoroethylene carbonate (FEC), difluoroethylene carbonate (DFEC), monofluoromethyl difluoromethyl carbonate (F-DMC), trifluoro dimethyl carbonate (TFDMC), or the like. Regarding the nonaqueous solvents as described above, it is possible to use 1 kind alone or to combine 2 or more kinds so as to use the resultant. As one example, the nonaqueous solvent consists of only the carbonates. As another example, the nonaqueous solvent contains the carbonates and the esters, such as methyl acetate.

As the supporting salt, it is possible to suitably use, for example, a lithium salt, such as $LiPF_6$, $LiBF_4$, and lithium bis(fluorosulfonyl)imide (LiFSI) (preferably, the $LiPF_6$). A concentration of the supporting salt is preferably equal to or more than 0.7 mol/L and not more than 1.3 mol/L.

Incidentally, the above described nonaqueous electrolytic solution might contain a component other than the above described components, insofar as the effect of the present disclosure is not significantly spoiled, and thus might contains, for example, various additive agents which might be a coating layer forming agent, such as vinylene carbonate (VC) and oxalate complex; a gas generating agent, such as biphenyl (BP) and cyclohexylbenzene (CHB); a thickening agent; or the like.

The lithium ion secondary battery 100, in which the swell of the negative electrode, when the electrical charge and the electrical discharge are repeated, is suppressed, is a low reaction force. In addition, the lithium ion secondary battery 100 has the higher capacity. The lithium ion secondary battery 100 can be used for various purposes. As a suitable usage, it is possible to apply it for a driving power supply mounted on a vehicle, such as battery electric vehicle (BEV), hybrid electric vehicle (HEV), and plug-in hybrid electric vehicle (PHEV). In addition, the lithium ion secondary battery 100 can be used as a storage battery, such as small electric power storage device. The lithium ion secondary battery 100 can be used, typically, in a form of a battery pack in which plural ones are connected in series and/or in parallel.

Above, as one example, the square-shaped lithium ion secondary battery 100 including the flat-shaped wound electrode assembly 20 has been explained. However, the lithium ion secondary battery can be configured to be a lithium ion secondary battery including a laminate type electrode assembly (in other words, an electrode assembly in which plural positive electrodes and plural negative electrodes are alternately laminated), too. In addition, the lithium ion secondary battery can be configured to be a cylindrical-shaped lithium ion secondary battery, a laminate case type lithium ion secondary battery, or the like.

According to a well known method, the lithium ion secondary battery 100 can be configured to be an all-solid state lithium ion secondary battery in which a solid electrolyte is used instead of the nonaqueous electrolyte.

In addition, the negative electrode 60 in accordance with the present embodiment is suitable for the negative electrode of the lithium ion secondary battery, but can be constructed for the negative electrode of the other secondary battery so as to be used, and the other secondary battery can be configured according to a well known method.

<<Evaluation>>

1. Test example

Below, a test example related to the herein disclosed technique would be explained, but it is not intended that the herein disclosed technique is restricted to the described test example.

(1) Practical example 1

[Manufacture of negative electrode]

The response area size of the negative electrode active material disclosed below is a converted value in a situation where the response area size A1 of the negative electrode active material in the upper layer of Practical example 1 is treated as 100. At first, the negative electrode composite material paste for lower layer was manufactured. In particular, the graphite particle C and the second Si-containing particle (Si amount Q2: 60 wt%, particle diameter M2: 4 $\mu$m) as the negative electrode active material (response area size A2: 140), a SWCNT as the electrically conducting material, and a CMC, a PAA and a SBR as the binder were prepared. Then, they were weighed to make the mass ratio for all materials satisfy C : second Si-containing particle : SWCNT : CMC : PAA : SBR = 85 : 15 : 0.1 : 1 : 1 : 1.5. Among them, raw materials other than the SWCNT and the SBR were dry-mixed, then the SWCNT and the dispersion medium were mixed and were subjected to hard kneading, and then the SBR and the dispersion medium were put into and then were diluted and mixed, so that the negative electrode composite material paste for upper layer was manufactured. Incidentally, the hard kneading is required to make a pressure load onto the paste be optimized in order to cover an active material periphery with the binder (CMC/PAA). In order to make this pressure load be optimized, an ideal solid content ratio $B_0$ of the paste was derived by the below described Formula (1). Incidentally, the ideal solid content ratio $B_0$ of the paste is a value depending on a hard kneading condition (for example, a shape, a rotation number, or a stirring time of an impeller, or the like).

$$B_0 = 100 - A_0 = 100/(100 + A_1) \times 100 \quad \text{Formula (1)}$$

$B_0$: Ideal solid content ratio [%]
$A_0$: Moisture rate at which a torque required for mixing becomes maximum [%]
$A_1$: Moisture amount when a mixture is set to be 100 g [mL]

Next, the negative electrode composite material paste for upper layer was manufactured. The negative electrode composite material paste for upper layer was manufactured by a method the same as the negative electrode composite material paste for lower layer, other than using the first Si-containing particle (Si amount Q1: 40 wt%, particle diameter M1: 7 $\mu$m) instead of the second Si-containing particle and then treating the response area size A1 as 100.

Then, the negative electrode composite material paste for lower layer was applied to coat the negative electrode substrate (the copper foil, 10 $\mu$m), and then it was dried. By applying the negative electrode composite material paste for upper layer to coat the negative electrode composite material paste for lower layer after the dry and then by drying it so as to make the ratio T1 : T2 of the upper layer thickness T1 and the lower layer thickness T2 become 50 : 50, the negative electrode active material layer configured with the 2-layers structure (response area ratio A1/A2 = 0.7, Si amount ratio Q1/Q2 = 0.7, and particle diameter ratio = 1.8) was provided on the negative electrode substrate. After that, by performing a pressing process to roll and to process so as to have a predetermined size, the negative electrode plate was obtained.

[Manufacture of positive electrode]

The lithium-nickel-cobalt-manganese base composite oxide (NCM) as the positive electrode active material, the polyvinylidene fluoride (PVdF) as the binder, and the acetylene black (AB) as the electrically conducting material were weighed to make the mass ratio satisfy NCM : PVdF : AB = 100 : 1 : 1, and were mixed in the N-methyl-2-pyrrolidone (NMP), so that the positive electrode composite material paste was prepared. This positive electrode composite material paste was applied to coat a positive electrode substrate (aluminum foil, thickness was 15 $\mu$m) formed in a long strip-like shape, and then it was dried. After that, by performing a pressing process to roll and to process so as to have a predetermined size, the positive electrode plate was obtained.

To each of the negative electrode and the positive electrode, a lead was attached, and then each electrode was laminated via the separator, so that the electrode assembly was manufactured. The manufactured electrode assembly was inserted into an outer case configured with an aluminum laminate sheet, the nonaqueous electrolyte was injected, and then an opening part of the outer case was sealed, so that a test cell (a laminate cell) was manufactured.

As the nonaqueous electrolytic solution, a solution was used in which the LiPF6 was dissolved at a concentration being 1 M into a mixed solvent containing the ethylene carbonate (EC), the fluoro ethylene carbonate (FEC), the ethyl methyl carbonate (EMC), and the dimethyl carbonate (DMC) at a volume ratio being EC : FEC : EMC : DMC = 15 : 5 : 40 : 40.

(2) Practical example 2

The test cell was manufactured similarly to Practical example 1, other than applying Si amount Q1 of first Si-containing particle = 45 and Si amount Q2 of second Si-containing particle = 55, and making the Si amount ratio Q1/Q2 be 0.8.

(3) Practical example 3

The test cell was manufactured similarly to Practical example 1, other than applying Si amount Q1 of first Si-containing particle = 20 and Si amount Q2 of second Si-containing particle = 45, and making the Si amount ratio Q1/Q2 be 0.4.

(4) Practical example 4

The test cell was manufactured similarly to Practical example 1, other than applying Si amount Q1 of first Si-containing particle = 55 and Si amount Q2 of second Si-containing particle = 80, and making the Si amount ratio Q1/Q2 be 0.7.

(5) Practical example 5

The test cell was manufactured similarly to Practical example 1, other than making the thickness ratio T1 : T2 of the thickness T1 of the upper layer and the thickness T2 of the lower layer be 70 : 30.

(6) Practical example 6

The test cell was manufactured similarly to Practical example 1, other than making the thickness ratio T1 : T2 of the thickness T1 of the upper layer and the thickness T2 of the lower layer be 30 : 70.

(7) Practical example 7

The test cell was manufactured similarly to Practical example 1, other than applying response area size A1 of negative electrode active material in upper layer = 130 and response area size A2 of negative electrode active material in lower layer = 140, and making the ratio A1/A2 of response area sizes be 0.9.

(8) Comparative example 1

The test cell was manufactured similarly to Practical example 1, other than making the negative electrode active material layer be configured with a single layer containing the first Si-containing particle and the second Si-containing particle. Incidentally, a composition of the composite material paste forming the negative electrode active material layer is adjusted to make the mass ratio satisfy C : second Si-containing particle : first Si-containing particle : SWCNT : CMC : PAA : SBR = 85 : 7.5 : 7.5 : 0.1 : 1 : 1 : 1.5.

(9) Comparative example 2

The test cell was manufactured similarly to Practical example 1, other than applying the paste containing the first Si-containing particle to coat the lower layer and applying the paste containing the second Si-containing particle to coat the upper layer.

(10) Comparative example 3

The test cell was manufactured similarly to Practical example 1, other than applying response area size A1 of negative electrode active material in upper layer = 140 and response area size A2 of negative electrode active material in lower layer = 100, and making the ratio A1/A2 of response area sizes be 1.4.

2. Evaluation test

(1) Measurement of response area sizes A1, A2 of negative electrode active materials in upper layer and lower layer

The above described negative electrode composite material paste for upper layer was applied to coat a Cu foil whose thickness was 10 $\mu$m, dried, and pressed to have a predetermined thickness. The resultant was processed to have a predetermined size, so that the negative electrode plate was obtained. A lead is attached to this negative electrode plate, and the negative electrode plate is laminated via a separator, so as to manufacture the electrode assembly containing the negative electrode active material (the first graphite particle and the first Si-containing particle). The manufactured electrode assembly was inserted into an outer case configured with an aluminum laminate sheet, a liquid injection of the nonaqueous electrolyte was performed, and an opening part of the outer case was sealed, so that the negative-electrode/negative-electrode symmetric cell was manufactured. After that, an impedance measurement of the manufactured negative-electrode/negative-electrode symmetric cell was performed under 25°C environment, and then the capacitance was derived from the measured value. Then, by the below Formula (1), the response area size of the negative electrode active material in the upper layer was derived. Regarding the negative electrode active material of the lower layer, the response area size was derived by a similar method, other than using the negative electrode composite material paste for lower layer, too.

$$\text{Response area size} = \text{(Capacitance)}/\text{(Addition amount of negative electrode active material)}$$

Formula (1)

(2) Negative electrode plate expansion rate evaluation

The test cell was manufactured, and then the electrical charge and discharge was repeatedly performed to satisfy 250 cycles while the CCCV electrical charge (0.4C _ 4.2 V _ 0.1 C cut) - CC electrical discharge (0.4C _ 2.5 V cut) under the 25°C environment was treated as 1 cycle. Then, with the below described Formula (2), the negative electrode plate expansion rate was derived.

Negative electrode plate expansion rate = {(Thickness of test cell after 250 cycles)/(Thickness of test cell before 250 cycles) - 1} × 100

Formula (2)

3. Evaluation result

The test results of each sample are summarized on Table 1 and Table 2.

[Table 1]

Table 1

| | Negative electrode active material layer | Response area size A1 of negative electrode active material in upper layer | Response area size A2 of negative electrode active material in lower layer | Internal Si amount Q1 of first Si-containing particle [wt%] | Internal Si amount Q2 of second Si-containing particle [wt%] | Mean particle diameter M1 of first Si-containing particle | Mean particle diameter M2 of second Si-containing particle | Thickness of upper layer T1 [μm] | Thickness of loweer layer T2 [μm] |
|---|---|---|---|---|---|---|---|---|---|
| Practical example 1 | Two layers | 100 | 140 | 40 | 60 | 7 | 4 | 30 | 30 |
| Practical example 2 | Two layers | 100 | 140 | 45 | 55 | 7 | 4 | 30 | 30 |
| Practical example 3 | Two layers | 100 | 140 | 20 | 45 | 7 | 4 | 30 | 30 |
| Practical example 4 | Two layers | 100 | 140 | 55 | 80 | 7 | 4 | 30 | 30 |
| Practical example 5 | Two layers | 100 | 140 | 40 | 60 | 7 | 4 | 42 | 18 |
| Practical example 6 | Two layers | 100 | 140 | 40 | 60 | 7 | 4 | 18 | 42 |
| Practical example 7 | Two layers | 130 | 140 | 40 | 60 | 5 | 4 | 30 | 30 |
| Comparative example 1 | Single layer | - | - | 40 | 60 | 7 | 4 | - | - |
| Comparative example 2 | Two layers | 140 | 100 | 60 | 40 | 7 | 4 | 30 | 30 |
| Comparative example 3 | Two layers | 140 | 100 | 40 | 60 | 4 | 7 | 30 | 30 |

[Table 2]

Table 2

|  | Response area ratio A1/A2 | Internal Si amount ratio Q1/Q2 | Particle diameter ratio M1/M2 | Thickness ratio of upper layer and lower layer T1 : T2 | Negative electrode plate expansion rate [%] |
|---|---|---|---|---|---|
| Practical example 1 | 0.7 | 0.7 | 1.8 | 50:50 | 28 |
| Practical example 2 | 0.7 | 0.8 | 1.8 | 50:50 | 30 |
| Practical example 3 | 0.7 | 0.4 | 1.8 | 50:50 | 28 |
| Practical example 4 | 0.7 | 0.7 | 1.8 | 50:50 | 28 |
| Practical example 5 | 0.7 | 0.7 | 1.8 | 70:30 | 40 |
| Practical example 6 | 0.7 | 0.7 | 1.8 | 30:70 | 26 |
| Practical example 7 | 0.7 | 0.7 | 1.3 | 50:50 | 36 |
| Comparative example 1 | - | 0.7 | 1.8 | - | 50 |
| Comparative example 2 | 1.4 | 1.5 | 1.8 | 50:50 | 53 |
| Comparative example 3 | 1.4 | 0.7 | 0.6 | 50:50 | 42 |

From the above described results, since Practical examples 1 to 7 included the negative electrode active material layer configured with the 2-layers structure and included an aspect where the particle comparatively tending to not easily cause the side reaction of the Si-containing particle was used in the upper layer, it was confirmed that the negative electrode plate expansion rate was comparatively lower.

Comparative example 1 included 2 kinds of Si-containing particles in the negative electrode active material layer, but the structure of the negative electrode active material layer was the single layer, and thus the effect of suppressing the negative electrode plate expansion rate was not suitably implemented.

Comparative examples 2 and 3 included the negative electrode active material layer configured with the 2-layers structure, but included an aspect where the particle comparatively tending to easily cause the side reaction of the Si-containing particle was used in the upper layer, and thus the effect of reducing the negative electrode plate expansion rate was not suitably implemented.

From the above described results, it was confirmed that, in order to reduce the negative electrode plate expansion rate, it was required to make the negative electrode active material layer be configured with 2-layers, and to have the aspect in which the upper layer side was made to be hardly expanded.

As described above, the present description contains the disclosure recited by each item described below.

Item 1:

A negative electrode for a secondary battery, comprising:

a negative electrode current collector; and
a negative electrode active material layer that is supported by the negative electrode current collector and comprises an negative electrode active material, wherein
the negative electrode active material layer comprises:

an upper layer that is relatively positioned at a surface side; and
a lower layer that is relatively positioned at a side of the negative electrode current collector,

the negative electrode active material comprises at least:

a graphite particle; and
a Si-containing particle in which a carbon and a Si are compounded to be composite,
a response area size A1 of the negative electrode active material comprised in the upper layer is smaller than
a response area size A2 of the negative electrode active material comprised in the lower layer, and

a Si amount Q1 of a first Si-containing particle comprised in the upper layer is smaller than a Si amount Q2 of a second Si-containing particle comprised in the lower layer.

Item 2:

The negative electrode recited in Item 1, wherein

a ratio A1/A2 of the response area size A1 of the negative electrode active material comprised in the upper layer and the response area size A2 of the negative electrode active material comprised in the lower layer is equal to or more than 0.6 and less than 1.0.

Item 3:

The negative electrode recited in Item 1 or 2, wherein

a ratio Q1/Q2 of the Si amount Q1 of the first Si-containing particle and the Si amount Q2 of the second Si-containing particle is equal to or more than 0.4 and less than 1.0.

Item 4:

The negative electrode recited in any one of Items 1 to 3, wherein

a ratio T1 : T2 of a mean thickness T1 of the upper layer and a mean thickness T2 of the lower layer is 10 : 90 to 90 : 10.

Item 5:

The negative electrode recited in any one of Items 1 to 4, wherein

the Si amount Q1 of the first Si-containing particle is 20 to 55 mass%, and

the Si amount Q2 of the second Si-containing particle is 45 to 80 mass%.

Item 6:

A secondary battery, comprising: a positive electrode; a negative electrode; and an electrolyte, wherein

the negative electrode is the negative electrode recited in any one of Items 1 to 5.

[Reference Signs List]

12     First graphite particle
14     First Si-containing particle
16     Second graphite particle
18     Second Si-containing particle
20     Wound electrode assembly
30     Battery case
36     Safe valve
42     Positive electrode terminal
42a    Positive electrode current collection plate
44     Negative electrode terminal
44a    Negative electrode current collection plate
50     Positive electrode sheet (positive electrode)
52     Positive electrode current collector
52a    Positive electrode current collector exposed portion
54     Positive electrode active material layer
60     Negative electrode sheet (negative electrode)
62     Negative electrode current collector
62a    Negative electrode current collector exposed portion
64     Negative electrode active material layer
70     Separator sheet (separator)
100    Lithium ion secondary battery

**Claims**

**1.** A negative electrode (60) for a secondary battery (100), comprising:

a negative electrode current collector (62); and
a negative electrode active material layer (64) that is supported by the negative electrode current collector (62) and comprises an negative electrode active material, wherein

the negative electrode active material layer (64) comprises:

an upper layer (64a) that is relatively positioned at a surface side; and
a lower layer (64b) that is relatively positioned at a side of the negative electrode current collector (62),

the negative electrode active material comprises at least:

a graphite particle; and
a Si-containing particle in which a carbon and a Si are compounded to be composite,

a response area size A1 of the negative electrode active material comprised in the upper layer (64a) is smaller than a response area size A2 of the negative electrode active material comprised in the lower layer (64b), and a Si amount Q1 of a first Si-containing particle (14) comprised in the upper layer (64a) is smaller than a Si amount Q2 of a second Si-containing particle (18) comprised in the lower layer (64b).

2. The negative electrode (60) according to claim 1, wherein
a ratio A1/A2 of the response area size A1 of the negative electrode active material comprised in the upper layer (64a) and the response area size A2 of the negative electrode active material comprised in the lower layer (64b) is equal to or more than 0.6 and less than 1.0.

3. The negative electrode according to claim 1 or 2, wherein
a ratio Q1/Q2 of the Si amount Q1 of the first Si-containing particle (14) and the Si amount Q2 of the second Si-containing particle (18) is equal to or more than 0.4 and less than 1.0.

4. The negative electrode according to any one of claims 1 to 3, wherein
a ratio T1 : T2 of a mean thickness T1 of the upper layer (64a) and a mean thickness T2 of the lower layer (64b) is 10 : 90 to 90 : 10.

5. The negative electrode according to any one of claims 1 to 4, wherein

the Si amount Q1 of the first Si-containing particle (14) is 20 to 55 mass%, and
the Si amount Q2 of the second Si-containing particle (16) is 45 to 80 mass%.

6. A secondary battery (100), comprising a positive electrode (50); a negative electrode (60); and an electrolyte, wherein the negative electrode (60) is the negative electrode according to any one of claims 1 to 5.

FIG.1

FIG.2

FIG.3

FIG.4

Europäisches
Patentamt
European
Patent Office
Office européen
des brevets

## EUROPEAN SEARCH REPORT

**Application Number**

EP 25 19 9912

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/173381 A1 (SAKAMOTO JUNICHI [JP] ET AL) 2 June 2022 (2022-06-02)<br>* claim 1 *<br>* paragraph [0064] *<br>* paragraph [0033] *<br>* paragraphs [0017], [0040] * | 1-6 | INV.<br>H01M4/133<br>H01M4/134<br>H01M4/36<br>H01M4/38<br>H01M4/587 |
| X | WO 2024/187521 A1 (CONTEMPORARY AMPEREX TECHNOLOGY CO LTD [CN])<br>19 September 2024 (2024-09-19)<br>* claim 1 *<br>* paragraphs [0012], [0020] *<br>* paragraph [0103] *<br>* claim 19 * | 1,2,4,6 | |
| X | CN 110 993 891 A (ZHUHAI COSMX BATTERY CO LTD) 10 April 2020 (2020-04-10)<br>* claim 1 *<br>* claims 2,3 *<br>* claim 4 *<br>* claim 10 * | 1,2,5,6 | |

**TECHNICAL FIELDS SEARCHED (IPC)**

H01M

The present search report has been drawn up for all claims

| Place of search | Date of completion of the search | Examiner |
|---|---|---|
| The Hague | 3 December 2025 | Moussa, Chantal |

## ANNEX TO THE EUROPEAN SEARCH REPORT
## ON EUROPEAN PATENT APPLICATION NO.

EP 25 19 9912

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-2025

| Patent document cited in search report | Publication date | Patent family member(s) | Publication date |
|---|---|---|---|
| US 2022173381 A1 | 02-06-2022 | CN 113646921 A | 12-11-2021 |
| | | JP 7432882 B2 | 19-02-2024 |
| | | JP WO2020202843 A1 | 08-10-2020 |
| | | US 2022173381 A1 | 02-06-2022 |
| | | WO 2020202843 A1 | 08-10-2020 |
| WO 2024187521 A1 | 19-09-2024 | CN 116565139 A | 08-08-2023 |
| | | EP 4618180 A1 | 17-09-2025 |
| | | JP 2025533110 A | 03-10-2025 |
| | | KR 20250053194 A | 21-04-2025 |
| | | WO 2024187521 A1 | 19-09-2024 |
| CN 110993891 A | 10-04-2020 | NONE | |

EPO FORM P0459

For more details about this annex : see Official Journal of the European Patent Office, No. 12/82

**REFERENCES CITED IN THE DESCRIPTION**

**Patent documents cited in the description**

- JP 2019175851 A
- JP 2017092009 A
- JP 2015038862 A
- WO 2014046144 A